Europäisches Patentamt

European Patent Office

Office européen des brevets

(11) Veröffentlichungsnummer: **0 282 900**
**A2**

## (12) EUROPÄISCHE PATENTANMELDUNG

(21) Anmeldenummer: 88103762.6

(22) Anmeldetag: 10.03.88

(51) Int. Cl.⁴: **G01N 25/68**

(30) Priorität: 18.03.87 DE 3708697

(43) Veröffentlichungstag der Anmeldung:
**21.09.88 Patentblatt 88/38**

(84) Benannte Vertragsstaaten:
**DE FR GB NL**

(71) Anmelder: **Drägerwerk Aktiengesellschaft
Moislinger Allee 53-55
D-2400 Lübeck 1(DE)**

(72) Erfinder: **Kähning, Stefan, Dipl.-Ing.
Heckkaten 5
D-2074 Steinburg 1(DE)**
Erfinder: **Sauerbaum, Thomas, Dipl.-Ing.
Steinkreuzredder 10
D-2401 Gross Grönau(DE)**

(54) Verfahren und Anordnung zur Messung des Taupunktes.

(57) Ein Verfahren zur Messung des Taupunktes nach Patenanmeldung P 36 33 015 soll dahingehend erweitert werden, daß eine automatische Nullpunktkorrektur durchgeführt werden kann. Dazu wird die Heizleistung an der Heizvorrichtung so weit erhöht, daß der Taubeschlag verdunstet und die sensorspezifische Eigenschaft, wie z. B. die Kapazität, gemessen und als Kalibriersignal der Auswerteeinheit zugeführt wird.

Fig. 1

EP 0 282 900 A2

## Verfahren und Anordnung zur Messung des Taupunktes

Die Erfindung betrifft ein Verfahren zur Messung des Taupunktes nach den im Oberbegriff des Hauptanspruchs angegebenen Merkmalen.

Zur Messung des Taupunktes eines Gases werden Taupunktsensoren eingesetzt, welche auf einer solchen Temperatur gehalten werden, daß es zur Bildung eines Taubeschlages auf der Sensoroberfläche kommt. Dabei ändert sich eine spezifische Sensoreigenschaft, beispielsweise die Kapazität eines Kondensators infolge der großen Dielektrizitätskonstante von Wasser, in Abhängigkeit von dem Taubeschlag. Zur Einstellung und Regelung der Sensortemperatur auf eine konstante Tauschichtdicke wird eine Kühleinrichtung als Temperiervorrichtung eingesetzt. Die Temperatur des Sensors wird durch die Temperiervorrichtung bei sich veränderndem Dampfgehalt in der Atmosphäre ständig auf den jeweils unterschiedlichen Taupunkt nachgeführt. Ein Temperaturfühler mißt die Temperatur des Sensors und zeigt sie als Taupunkttemperatur an (DE-OS 32 31 995).

Durch die Aufteilung der Temperiervorrichtung in eine separate Kühlvorrichtung und eine getrennte Heizvorrichtung, wie es in der Anmeldung P 36 33 015 beschrieben ist, kann einerseits die Kühlleistung so bemessen werden, daß sie dem Sensor mehr Wärme, als zur Erreichung des zu erwartenden Taupunktes notwendig wäre, entzieht, wobei andererseits eine Heizvorrichtung geringer Wärmekapazität für eine empfindlichere und leichter regelbare Wärmezufuhr zur Erreichung der zu bestimmenden Taupunkttemperatur sorgt, und somit Schwankungen des Taupunktes durch die Heizvorrichtung schnell und genau ausgeglichen werden.

Im Laufe eines länger andauernden Betriebs oder auch nach wiederholtem Ein-und Auschalten eines nach diesem Verfahren arbeitenden Gerätes kann es vorkommen, daß sich Partikel auf der Sensoroberfläche oder sich im Kondensat gelöste Stoffe beim Aufwärmen oder Auftrocknen des Sensors ablagern. Je nach Art der Rückstände und deren Beeinflussung der zur Messung herangezogenen spezifischen Sensoreigenschaft (z. B. seine Kapazität oder elektrische Leitfähigkeit) kann sich der Nullpunkt im Laufe der Messung allmählich unbemerkt verschieben und so zu einer Verfälschung des Meßergebnisses führen.

Der vorliegenden Erfindung liegt somit die Aufgabe zugrunde, ein Verfahren der genannten Art nach der Patentanmeldung P 36 33 015 so zu verbessern, daß eine automatische Nullpunktkorrektur durchgeführt werden kann.

Die Lösung der Aufgabe erfolgt durch die im kennzeichnenden Teil des Anspruchs angegebenen Merkmale.

Der Vorteil der Erfindung liegt hauptsächlich darin, daß nunmehr entweder kurz vor Beginn eines Meßzyklus oder während der Messung in kürzer oder länger aufeinanderfolgenden Zeitabschnitten ein Kalibriervorgang eingeleitet werden kann. Das Kalibriersignal definiert dann den Nullpunkt des Sensorsignals für die nachfolgende(n) Messung-(en) des Taupunktes.

Eine Meßanordnung zur Durchführung des Verfahrens enthält das Sensorelement zusammen mit dem Temperaturfühler und einer Heizvorrichtung auf einem gemeinsamen Trägersubstrat, welches in thermischem Kontakt mit einer Kühlvorrichtung steht, wobei die Heizvorrichtung zur Regelung der Heizleistung und die Kühlvorrichtung zur Vorgabe der Kühlleistung an eine Regeleinheit angeschlossen sind.

Die Regeleinheit gibt zu Kalibrierzwecken ein Steuersignal für die Heizvorrichtung ab, durch welches die Heizleistung so weit erhöht wird, daß eine vollständige Auftrocknung der Sensoroberfläche erfolgt. Die dann gemessene spezifische Sensoreigenschaft wird der Regeleinheit als Nullpunktsignal zugeführt und dieses in ihr mit den nachfolgenden Messungen des Taupunktes verarbeitet.

Zur Messung des Taupunktes wird das Sensorelement auf eine Grundtemperatur unterhalb des Taupunktes abgekühlt und durch die Heizvorrichtung so weit erwärmt, bis die Temperaturdifferenz zwischen Grundtemperatur und Taupunkttemperatur erreicht ist. In diesem Falle entsteht auf der Oberfläche des Sensorelementes ein Taubeschlag konstanter Dicke. Im Falle eines Kondensators als Sensorelement erfolgt dadurch eine Kapazitätsänderung, die als ein entsprechendes Auswertesignal an die Regeleinheit abgegeben wird. Veränderungen des Taupunktes und somit Veränderungen der Sensoreigenschaften werden durch entsprechendes Erhöhen bzw. Erniedrigen der Heizleistung in der Heizvorrichtung ausgeglichen. Durch den ständigen thermischen Kontakt mit der Kühlvorrichtung wird nach Erniedrigung der Heizleistung die überschüssige Wärmemenge der Heizvorrichtung unverzüglich abgeleitet, so daß in jedem Falle ein kurzes Ansprechverhalten des Sensorelementes erzielt wird.

Ein Ausführungsbeispiel der Erfindung wird anhand der schematischen Zeichnung dargestellt und im folgenden näher erläutert. Es zeigen:

Fig. 1 die Draufsicht auf Sensor, Heizvorrichtung und Temperaturfühler in Dünnschichttechnik

Fig. 2 die Ansicht des Sensors nach Figur 1, montiert auf einer Kühlvorrichtung

Fig. 3 das Blockdiagramm für eine Meßanordnung.

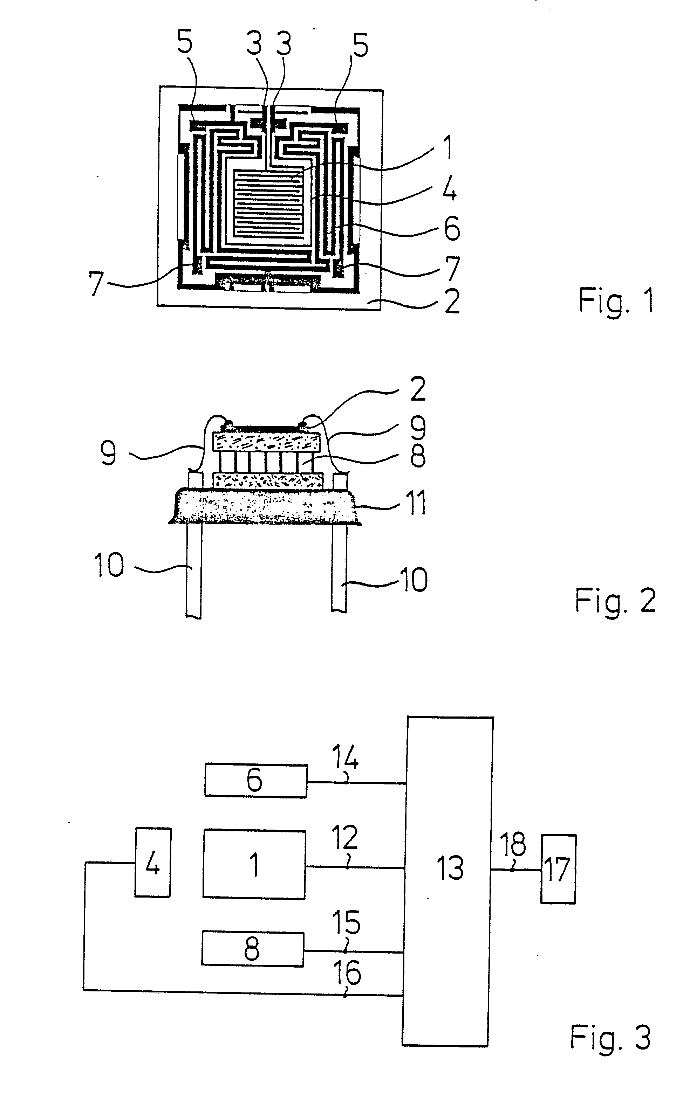

In Figur 1 ist ein Sensor (1) dargestellt, der aus kammartig ineinandergreifenden Zähnen besteht, welche auf ein Trägersubstrat (2) aufgebracht sind. Der Sensor (1) besitzt Sensoranschlüsse (3). Den Sensor (1) umgibt in geringem Abstand eine als Temperaturfühler (4) ausgebildet Leiterbahn mit zwei Temperaturmeßanschlüssen (5). Um den Temperaturfühler (4) schlingen sich ineinander gewunden die Leiterbahnen einer Heizvorrichtung (6), welche Heizanschlüsse (7) besitzt. Sämtliche beschriebenen Leitungszüge sind in Dünnschichttechnik auf das Trägersubstrat (2) aufgebracht.

Das Trägersubstrat (2) wird mit seiner dem Sensor (1) abgewandten Fläche auf eine Kühlvorrichtung (8) in thermischen Kontakt gebracht, wie dies in Figur 2 dargestellt ist. Dabei ist die Kühlvorrichtung (8) als Peltierkühler ausgebildet. Die jeweiligen Anschlüsse (3, 5, 7) des Sensors (1), des Temperaturfühlers (4) und der Heizvorrichtung (6) sind über entsprechende Anschlußdrähte (9) an dazugehörige Kontaktstifte (10) angeschlossen, welche in einem Sockel (11) befestigt sind.

Das Blockdiagramm nach Figur 3 zeigt - schematisch den Sensor (1), dessen Sensoranschlüsse (3) über eine Sensorleitung (12) an eine Regeleinheit (13) angeschlossen sind. Mit der Regeleinheit (13) sind ebenfalls die Heizvorrichtung (6) und die Kühlvorrichtung (8) über entsprechende Heizleitung (14) und Kühlanschlußleitung (15) verbunden. Der Temperaturfühler (4) ist über eine Temperaturmeßleitung (16) an die Regeleinheit (13) angeschlossen. Von der Regeleinheit (13) führt eine Verbindungsleitung (18) zu einem Anzeigegerät (17) für die Taupunkttemperatur.

Zum Betrieb der Meßanordnung wird durch die Regeleinheit (13) die Kühlleistung der Kühlvorrichtung (8) so festgelegt, daß die zusätzlich eingeschaltete Heizvorrichtung (6), deren Heizleistung ebenfalls von der Regeleinheit (13) bestimmt wird, den Sensor (1) auf eine solche Temperatur anhebt, bis der Sensor (1) über die Sensorleitung (12) ein Signal an die Regeleinheit (13) abgibt und somit anzeigt, daß der Taupunkt erreicht ist. Die dabei von dem Temperaturfühler (4) gemessene Temperatur wird über die Temperaturmeßleitung (16) an die Regeleinheit (13) abgegeben und von dem Anzeigegerät (17) als Taupunkttemperatur angezeigt. Besteht der Sensor beispielsweise aus einem Flächenkondensator, dessen Kapazität sich bei Bildung eines Taubeschlags sprunghaft ändert, wird ein entsprechendes Signal über die Sensorleitung (12) an die Regeleinheit (13) abgegeben, die dann sofort die Heizleistungszufuhr an die Heizvorrichtung (6) auf dem augenblicklichen Wert konstant hält. Die dabei von dem Temperaturfühler (4) gemessene Sensortemperatur wird als Taupunkttemperatur am Anzeigegerät (17) angezeigt. Verändert sich die Temperatur oder der Dampfgehalt der zu untersuchenden Atmosphäre, verändert sich der Taubelag in seiner Dicke, welches zu einer Veränderung der Kapazität des Sensors führt. Die Regeleinheit (13) versucht dann durch gezielte Abgabe der Heizleistung an die Heizvorrichtung (6), die ursprüngliche, einmal vorgegebene Schichtdicke des Taubelages wiederherzustellen. Wegen der geringen Wärmekapazität der in Dünnschichttechnik aufgebrachten Heizvorrichtung (6) kann dieser Regelvorgang mit einer sehr kurzen Zeitkonstanten erfolgen. Dabei wird der Sensor (1) durch die Kühlvorrichtung (8) sofort abgekühlt, sobald die entsprechende Heizleistung der Heizvorrichtung (6) verringert wurde. Zur Erwärmung des Sensors (1) braucht die Heizleistung der Heizvorrichtung (6) lediglich entsprechend erhöht zu werden. Auf diese Weise erhält man eine Meßanordnung, bei der zur Messung der Taupunkttemperatur eine leistungsarme, rasch reagierende Temperaturregelung in einem engen, einer durch die Kühlvorrichtung (8) vorgegebenen Grundtemperatur überlagerten Temperaturregelbereich erfolgt.

Zu Kalibrierzwecken wird von der Regeleinheit (13) ein Steuersignal an die Heizvorrichtung (6) zur Aufheizung der Sensoroberfläche bis zur vollständigen Auftrocknung des Taubeschlags abgegeben. Dabei können auch evtl. zurückgebliebene Schmutzteile desorbiert werden. Wenn sich während dieser Aufheizzeit die spezifische Sensoreigenschaft (Kapazität oder elektrischer Widerstand) nicht mehr ändert, wird das dann aufgenommene Meßsignal als Nullpunkt-Kalibrierwert angesehen und der Regeleinheit (13) zur Weiterverarbeitung zugeleitet. Somit kann jeder nachfolgende Meßwert beispielsweise mit dem gespeicherten Nullpunktwert gewichtet werden.

**Ansprüche**

Verfahren zur Messung des Taupunktes, bei dem eine der zu untersuchenden Atmosphäre ausgesetzte Oberfläche eines Sensors durch eine regelbare Temperiervorrichtung auf eine solche Temperatur gebracht wird, die zur Bildung eines Taubeschlages auf der Sensoroberfläche führt, wodurch eine spezifische Sensoreigenschaft verändert und zur Regelung der Temperiervorrichtung auf konstante Tauschichtdicke an der Sensoroberfläche verarbeitet wird, wobei die dabei durch einen Temperaturfühler festgestellte Sensortemperatur als Taupunkttemperatur angezeigt wird. wodurch dem Sensor sowohl mittels einer Kühlvorrichtung durch Vorgabe einer einstellbaren Kühlleistung mehr Wärme, als zur Erreichung der Taupunkttemperatur notwendig ist, entzogen, als auch durch eine zusätzliche Heizvorrichtung eine solche regelbare Heizleistung zugeführt wird, daß die Sensoroberfläche die Taupunkttemperatur erreicht, entsprechend der Patentanmeldung P 36 33 015, dadurch gekennzeichnet, daß zu Kalibrierzwecken die Heizleistung an der Heizvorrichtung (6) so weit erhöht wird, daß eine vollständige Verdunstung des Taubeschlags eintritt, daß bei verdunstetem Taubeschlag die spezifische Sensoreigenschaft gemessen und als Kalibriersignal der Auswerteeinheit (13) zugeführt wird.

0 282 900

Fig. 1

Fig. 2

Fig. 3